# EUROPÄISCHE PATENTANMELDUNG

(11) **EP 0 892 290 A2**
(43) Veröffentlichungstag der Anmeldung: **20.01.1999**
(21) Anmeldenummer: 98113129.5
(22) Anmeldetag: 15.07.1998
(51) Int. Cl.: G02B 5/32

(54) **Beleuchtungssystem mit holographischem Bildschirm**

(30) Priorität: 17.07.1997 DE 19730564
(71) Anmelder: Daimler-Benz Aktiengesellschaft, 70567 Stuttgart (DE); Eberl, Heinrich A., 87463 Probstried (DE)
(72) Erfinder: Abersfelder, Günter, Dr., 71065 Sindelfingen (DE); Grantz, Helmut, 71067 Sindelfingen (DE); Halldorsson, Thorsteinn, 81276 München (DE); Schmidt-Bischoffshausen, Horst, Dr., 85579 Neubiberg (DE); Uhl, Stefan, Dr., 70597 Stuttgart (DE); Eberl, Heinrich Alexander, 87463 Probstried (DE)

(57) **Zusammenfassung**

Die vorliegende Erfindung betrifft verschiedene Verwendungsmöglichkeiten eines holographischen Bildschirmes als Teil eines Beleuchtungssystemes.

## Beschreibung

Die vorliegende Erfindung betrifft ein Beleuchtungssystem, das eine Lichtquelle und eine Anordnung zur Lichtverteilung aufweist.

Bekannte Beleuchtungssysteme benutzen üblicherweise eine Lichtquelle zur direkten Beleuchtung von Gegenständen. Um eine gerichtete Strahlausbreitung zu ermöglichen, werden üblicherweise Linsensysteme und/oder Spiegelsysteme eingesetzt. Für eine diffuse Strahlausbreitung werden Streuscheiben oder diffus reflektierende Leuchtschirme eingesetzt. Ein großer Teil der Energie zur Lichterzeugung über die als Lichtquelle verwendeten sogenannten thermischen Strahler geht dabei durch Wärmeerzeugung und Verluste z.B. bei Streuscheiben verloren. Außerdem wird die Lichtfarbe im wesentlichen durch die Lichtquelle selbst bestimmt und kann nur verlustbehaftet durch die Filterwirkung eingefäbter Filterscheiben oder Reflexionsflächen geändert werden. Eine verlustfreie aktive Veränderung der Lichtfarbe ist nicht möglich.

Aus den beiden nicht vorveröffentlichen Patentanmeldungen beim Deutschen Patentamt mit den Anmeldenummern 197 00 162.9 und 197 03 592.2 ist es bekannt, einen holgraphischen Bildschirm für eine Laseraufprojektion und eine Laserrückprojektion vorzusehen. Dieser Bildschirm ist bei normalem Umgebungslicht schwarz. Für bestimmte Wellenlängen des Lichtes kann dieser Bildschirm jedoch so ausgebildet sein, daß dieses Licht in einen bestimmten Raumwinkel durchgelassen bzw. zurückgelassen wird. Nach den Ausführungen in den beiden Patentanmeldungen muß dieser Bildschirm nicht eben ausgebildet sein. Es ist vielmehr möglich, diesen Bildschirm mit einer nahezu beliebigen Oberflächenkontur auszubilden.

Erfindungsgemäß weist gemäß Anspruch 1 eine Anordnung zur Lichtverteilung in einem Beleuchtungssystem einen solchen holographischen Bildschirm auf.

Dabei werden die Eigenschaften eines solchen Bildschirmes genutzt, Licht bestimmter Wellenlängen aus vorbestimmter Richtung in einen bestimmten Raumwinkelbereich zurückzustreuen. Ein solcher Bildschirm muß bei Umgebungslicht nicht schwarz oder zumindest dunkel erscheinen, weil dies für ein Beleuchtungssystem im Dunkeln ohne Bedeutung ist.

Genutzt wird zudem die Eigenschaft, daß die für den holographischen Bildschirm holographisch aufgenommene Bildschirmfläche nicht eben sein muß sondern ebenso beispielsweise die Form eines Reflektors haben kann. Hiermit wird die Eigenschaft dieses Reflektors auf den holographischen Bildschirm übertragen.

Dadurch bestehen weitgehende Freiheiten in der Gestaltung von Beleuchtungslementen hinsichtlich deren Farbe und Form.

Dadurch lassen sich beispielsweise flächige, gleichmäßig helle Leuchtkörper herstellen, die ihr Licht in genau definiertem Winkel abstrahlen und den Raum oder die angeleuchteten Gegenstände gleichmäßig ausleuchten, so daß der Leuchtkörper nur dann hell erscheint, wenn man ihn innerhalb des Leuchtwinkels anschaut. Für solche Leuchtkörper sollten die Projektionslichtquellen so angeordnet werden, daß sie selbst nicht sichtbar sind. Eine solche Anordnung verhindert ohne spezielle Abblend- oder Abschattungseinrichtungen störende Einflüsse durch den Blick auf die helle Lichtquelle. Für jeden Betrachter bleibt also das Licht der Lichtquelle unsichtbar, so lange er sich nicht innerhalb des Lichtkegels befindet. Dadurch ergeben sich vorteilhafte Einsatzmöglichkeiten beispielsweise als unauffällige Studioleuchten im Bereich des Blickwinkels der Kamera.

Bei dem Beleuchtungssystem nach Anspruch 2 erscheint der Bildschirm bei Umgebungslicht grau oder farbig.

Dadurch wird hinsichtlich der Farbgestaltung eine große Vielfalt ermöglicht.

Bei dem Beleuchtungssystem nach Anspruch 3 wird durch eine entsprechend verlaufende Tönung der Bildschirmfläche, von der das Hologramm gefertigt wird, von weiß bis grau eine eventuell ungleichmäßige Lichtverteilung des Projektionssytemes ausgeglichen.

Dadurch kann dieses einfacher und kostengünstiger hergestellt werden. Es reichen in der Regel einfache Kaltlichtspiegel-Halogenlampen. Es werden dabei aus dem Weißlicht dieser Lampen nur die Lichtwellenlängen rückgestreut oder durchgelassen, die den Laserwellenlängen entsprechen, die für die Herstellung dieses Bildschirms verwendet wurden. Dadurch wird beispielsweise die Abstrahlung von infraroten Wärmestrahlen unterbunden. Das aus den Farben rot, grün und blau zusammengesetzte Licht erscheint trotzdem weiß.

Nach Anspruch 4 ist bei den vorgenannten Beleuchtungssystemen das Hologramm weiß.

Dadurch wird farbiges Projektionslicht in derselben Farbe wiedergegeben.

Nach Anspruch 5 ist das Hologramm farbig.

Dadurch erfolgt eine Lichtwandlung von weißem Projektionslicht in die Farbe des Hologrammes, wenn dieses einen farbigen Bildschirm darstellt. Hat das Licht Anteile der Hologrammfarbe oder Weißlichtanteile, werden nur diese in die Hologrammfarbe gewandelt.

Es können für farbige Darstellung allgemein die Farben rot, grün und blau verwendet werden.

Nach Anspruch 6 weist das Beleuchtungssystem als Lichtquelle eine schmalbandige Weißlichtglühlampe oder einen energiesparenden Laser auf.

Weiterhin ergibt das Hologramm einer spiegelnden Fläche eine fast verlustfreie Ausnutzung des Lichtstroms der Projektionslichtquelle in die gewünschte Richtung mit dem gewünschten Winkel.

Der Bildschirm kann in seiner Form und Abmessung frei gestaltet werden. Eine besonders gute Ausnutzung ergibt sie wenn die nutzbare Bildschirmfläche dem Außenmaß entspricht.

Nach Anspruch 7 wird das Beleuchtungssystem in der Straßenbeleuchtung verwendet.

Im Gegensatz zu konventionellen Straßenbeleuchtungen, deren Leuchtkörper in Blickrichtung eines Autofahrerst Blendungen erzeugen können, lassen sich mit dem holographischen Bildschirm blendfreie Straßenlampen realisieren. Der Leuchtkörper wirkt beispielsweise in Blickrichtung des Autofahrers schwarz, während die Umgebung angeleuchtet wird. Selbstverständlich müssen dabei die eigentlichen Leuchtkörper so angeordnet werden, daß sie selbst abgeschirmt sind.

Bei Verwendung eines Lasers als Lichtquelle können hierbei zudem erhebliche Mengen an elektrischer Energie gespart werden. Die Einsparung kann in der Größenordnung von 90% liegen.

Nach Anspruch 8 wird ein derartiges Beleuchtungssystem in Film- oder Fotostudios oder für die Bühnenbeleuchtung verwendet.

Es lassen sich wie bereits ausgeführt Leuchtkörper herstellen, deren flächige Ausdehnung eine völlig schattenfreie Ausleuchtung ermöglicht. Dies kann beispielsweise Lichtwannen oder Reflexionsschirme in Fotostudios ersetzen. Zu Fotozwecken lassen sich die Hologramme auch durch Blitze anleuchten um kurzzeitig einen sehr hohen Lichtstrom zu erzeugen. Bei Verwendung von Hochleistungslasern sind sogar sehr kurzzeitig sehr hohe Lichtleistungen für solche Blitzanlagen möglich, ohne daß wegen der großflächigen Abstrahlung eine Gefahr wegen des Laserlichtes besteht.

Nach Anspruch 9 wird ein derartiges Beleuchtungssystem zur Beleuchtung temperaturemfindlicher Gergenstände verwendet.

Da die eigentliche Lichtquelle nur das Hologramm anstrahlt und dieses selbst nur Streulicht liefert, können temperaturempfindliche Gegenstände hell ausgeleuchtet werden. Hierbei erweist sich eine Auflichtprojektion als vorteilhaft. Hierzu ist es besonders vorteilhaft, entweder die thermische Lichtquelle als Strahler entfernt vom Reflexionsschirm anzuordnen oder noch besser Laser als Lichtquelle zu verwenden, die nicht im IR-Bereich abstrahlen.

Ein besonders vorteilhaftes Anwendungsgebiet einer solchen Kaltlichtquelle ist beispielsweise die Ausleuchtung von Fernseh- und Filmstudios, wodurch die thermische Belastung der Schauspieler und Akteure verringert wird.

Bei Verwendung von Lasern als Lichtquelle läßt sich durch geeignete Modulation ohne Filter verlustfrei jede gewünschte Lichtfarbe für besondere Bühneneffekte einstellen.

Nach Anspruch 10 wird das Beleuchtungssystem als Punktlichtquelle eines Projektionssystems oder Scheinwerfersystems verwendet.

Das Hologramm eines hellen oder spiegelnden Punktes ermöglicht die Darstellung einer fast idealen Punktlichtquelle für hochwertige Projektionssysteme oder Scheinwerfersysteme.

Nach Anspruch 11 findet das Beleuchtungssystem als tragbare und bewegliche Leuchte Verwendung.

Dies erweist sich beispieleweise vorteilhaft beim Einsatz als Leuchte für Kameras. Dabei wirkt es sich weiterhin vorteilhaft aus, daß die Leuchte energiesparend betreibbar ist.

Nach Anspruch 12 findet das Beleuchtungssystem als Lichtsignal eines Kraftfahrzeuges Verwendung.

Bei Tageslicht oder Sonneneinstrahlung nicht oder schwer erkennbare Lichtsignale wie Blinker oder Bremslicht werden klar erkennbar. Weiterhin ist die Herstellung einfacher als bei konventionellen Systemen.

Nach Anspruch 13 wird das Beleuchtungssystem enthaltend einen solchen Bildschirm als Innenbeleuchtung eines Fahrzeuges verwendet.

Die Richtungsselektivität des holographischen Bildschirmprinzips ermöglicht für Fahrzeuge aller Art eine Innenbeleuchtung, die für den Fahrer nicht störend ist und gleichzeitig für die Insassen eine hervorragende Lesebeleuchtung darstellt.

Nach Anspruch 14 wird das Beleuchtungssystem mit einem solchen Bildschirm als Scheinwerfer eines Fahrzeuges verwendet.

Die Abbildung des Linsen/Reflektorsystems des Scheinwerfers als Hologramm ermöglicht die Darstellung von Scheinwerfern, die bei Tageslicht schwarz erscheinen und aus einer anderen Richtung als der Abstrahlrichtung des Scheinwerfers nicht als störende Lichtquelle erkennbar sind. Außerdem besteht die Möglichkeit die Anbringung der Lichtquelle frei zu gestalten. Das Scheinwerfersystem kann insgesamt flach sein.

Als besonders vorteilhaftes Anwendungsgebiet erweist sich die Anwendung als transportable Leuchte insbesondere dann, wenn eine Energieversorgung von außen schwer zu realisieren ist. Durch die Einsparung von über 90% Energie bei Verwendung eines Lasers als Lichtquelle ist die Anwendung beispielweise als Kameraleuchte oder als Lichtsystem für Expeditionen besonders interessant.

Da bei einer Anwendung als Beleuchtungssytem der Fremdlichteinfluß bei Dunkelheit keine Rolle spielt, müssen hinsichtlich der Absorptionseigenschaften des Bildschirmsystems nur geringe Anforderungen gestellt werden. Demnach ist eine nahezu freie Farbauswahl des Erscheinungsbildes der holographischen Beleuchtung bei Umgebungslicht möglich. Diese Leuchte kann also in der Farbe dem Design der Umgebung wie der Farbe des Fahrzeuges angepaßt werden. Nach Einschalten der Lichtquelle erfolgt dann die Lichtausbreitung entsprechend der Hologrammfarbe bzw. der Farbe der Lichtquelle.

Die Zeichnung (Figur 1 und Figur 2) zeigt noch zwei Ausführungsbeispiele von Projektionssystemen sowie ein Beispiel für eine Straßenbeleuchtung (Figur 3).

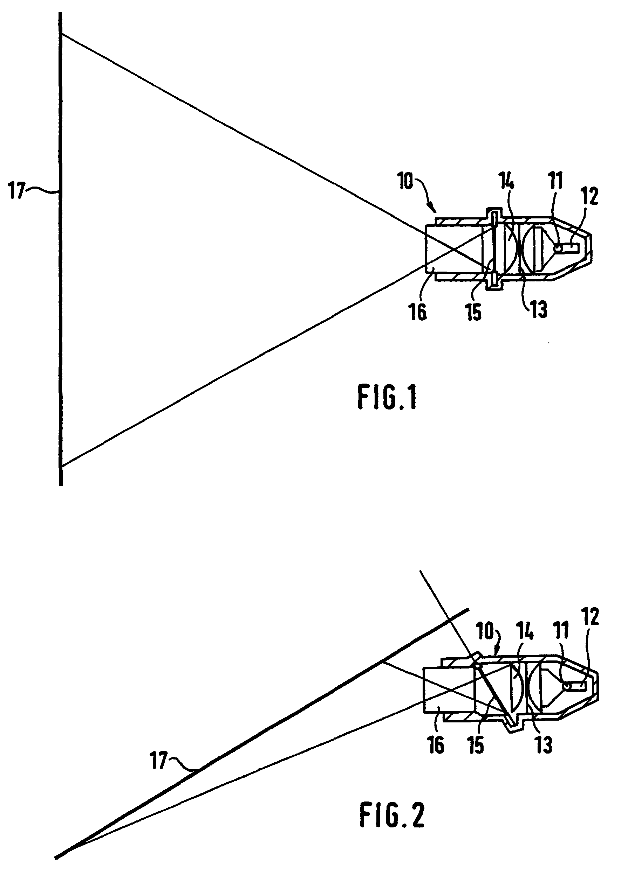

Figur 1 zeigt ein erstes Ausführungsbeispiel eines Projektionssystems 10. In dem Projektionssystem 10 befindet sich eine Glühbirne 11 und ein Ellipsoidreflektor 12. Das Licht wird über einen Wärmeschutzfilter 13 und einen Kondensor 14 auf ein Display 15 gegeben.

Weiterhin ist ein Objektiv 16 vorhanden. Mit 17 ist die Projektionsfläche bezeichnet. Es handelt sich hierbei um ein Projektionssystem für ein holographisches Display mit Weißlicht und kleinem LCD-Display im Strahlengang.

Figur 2 zeigt ein Schrägprojektionssystem nach Scheimpflug als Ausführungsbeispiel eines Projektionssystemes. Gleiche Bauteile zur Figur 1 sind mit den gleichen Bezugszeichen versehen.

Die Abmessungen beider Projektionssysteme betragen nur einige cm.

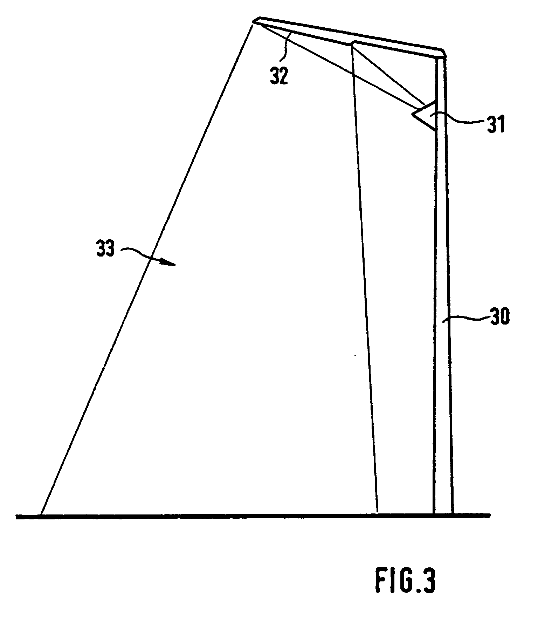

Figur 3 zeigt noch ein Ausführungsbeispiel einer Straßenbeleuchtung. Eine Sträßenlampe 30 weist ein Lampengehäuse 31 auf, dessen Lichtquelle abgeschirmt ist. Weiterhin weist diese Sträßenlampe 30 eine holographische Fläche 32 auf. Bei der Beleuchtung ergibt sich dann der dargestellt Lichtkegel 33.

## Patentansprüche

1. Beleuchtungssystem, das eine Lichtquelle und eine Anordnung zur Lichtverteilung aufweiß, dadurch gekennzeichnet, daß die Anordnung zur Lichtverteilung einen holographischen Bildschirm aufweist.

2. Beleuchtungssystem nach Anspruch 1,
dadurch gekennzeichnet, daß der Bildschirm bei Umgebungslicht grau oder farbig erscheint.

3. Beleuchtungssystem nach Anspruch 1,
dadurch gekennzeichnet, daß durch eine entsprechend verlaufende Tönung der Bildschirmfläche, von der das Hologramm gefertigt wird, von weiß bis grau eine eventuell ungleichmäßige Lichtverteilung des Projektionssystemes ausgeglichen wird.

4. Beleuchtungssystem nach einem der Ansprüche 1 bis 3,
dadurch gekennzeichnet, daß das Hologrammn weiß ist.

5. Beleuchtungssystem nach einem der Ansprüche 1 bis 3,
dadurch gekennzeichnet, daß das Hologramm farbig ist.

6. Beleuchtungssystem nach einem der vorhergehenden Ansprüche,
dadurch gekennzeichnet, daß als Lichtquelle eine schmalbandige Weißlichtglühlampe oder ein energiesparender Laser verwendet wird.

7. Verwendung eins Beleuchtungssystems nach einem der Ansprüche 1 bis 6 in der Straßenbeleuchtung.

8. Verwendung eines Beleuchtungssystems nach einem der Ansprüche 1 bis 6 in Film- oder Fotostudios oder für die Bühnenbeleuchtung.

9. Verwendung eines Beleuchtungssystems nach einem der Ansprüche 1 bis 6 zur Beleuchtung temperaturemfindlicher Gegenstände.

10. Verwendung eins Beleuchtungssystems nach einem der Ansprüche 1 bis 6 als Punktlichtquelle eines Projektionsystems oder Scheinwerfersystems.

11. Verwendung eines Beleuchtungssystems nach einem der Ansprüche 1 bis 10 als tragbare und bewegliche Leuchte.

12. Verwendung eines Beleuchtungssystems nach einem der Ansprüche 1 bis 6 als Lichtsignal eines Kraftfahrzeuges.

13. Verwendung eines Beleuchtungssystems nach einem der Ansprüche 1 bis 6 als Innenbeleuchtung eines Fahrzeuges.

14. Verwendung eines Beleuchtungssystems nach einem der Ansprüche 1 bis 6 als Scheinwerfer eines Fahrzeuges.
